# EUROPÄISCHE PATENTSCHRIFT

(11) **EP 1 587 193 B1**
(45) Veröffentlichungstag und Bekanntmachung des Hinweises auf die Patenterteilung: **16.06.2010**
(21) Anmeldenummer: 05005776.9
(22) Anmeldetag: 16.03.2005
(51) Int. Cl.: H02G 3/04

(54) **Leitungsschutzvorrichtung**
Wire protection device
Dispositif protecteur de câble

(30) Priorität: 13.04.2004 DE 102004018313
(43) Veröffentlichungstag der Anmeldung: 19.10.2005
(73) Patentinhaber: Kramer, Karl, 85053 Ingolstadt (DE); Makohonenko, Mascha Alexandra, 85053 Ingolstadt (DE)
(72) Erfinder: Kramer, Karl, 85053 Ingolstadt (DE); Makohonenko, Mascha Alexandra, 85053 Ingolstadt (DE)
(74) Vertreter: Säger, Manfred

(56) Entgegenhaltungen:
- EP-A- 0 887 902
- WO-A-02/054553
- DE-A1- 10 031 692
- DE-A1- 19 751 611
- DE-C1- 10 139 740
- DE-U- 1 881 159
- FR-A- 1 344 705
- FR-A- 2 591 306
- GB-A- 2 009 523
- GB-A- 2 365 941
- US-A- 5 800 762

## Beschreibung

Die Erfindung betrifft eine Leitungsschutzvorrichtung bzw. Leitungsschutzvorrichtungen zum Schutze von einer und mehreren Leitungen jeglicher Art, insbesondere zum Schutze der Leitungen von Kraftfahrzeugen und des täglichen Lebensbereiches, vor Tierverbiss und/oder zur allgemeinen Bündelung von Leitungen, jeglicher Art und/oder zur Umhüllung von einer und mehreren Leitungen, jeglicher Art, zur farblichen Veränderung und optischen Verschönerung.

Speziell elektrische Leitungen und Fluidleitungen, beispielsweise Kühlmittelschläuche, werden insbesondere bei Nachts im Freien abgestellter Autos von Mardern durch Verbiss beschädigt, um dies zu vermeiden, ist es bekannt, den Motorraum schlupfdicht abzuzäunen, elektrisch aufladbare Drähte zu verlegen oder die Leitungen mit Schutzhülsen zu versehen. Diese Maßnahmen sind aufwendig oder können einen Marderverbiss nicht immer wirksam vermeiden.

Der Erfindung liegt die Aufgabe zugrunde, eine Leitungsschutzvorrichtung bzw. Leitungsschutzvorrichtungen zu schaffen, welche:
■ Sicheren Schutz vor Beschädigung durch Tierverbiss an Leitungen, jeder Art, bietet.
■ Sicheren Schutz für alle Leitungen eines jeden Kfz-Typen bietet, ohne hierbei spezifisch auf jede einzelne Leitung oder der Leitungen eines jeweiligen Kfz-Modells einzugehen.
■ Sich individuell an die unterschiedlichsten Leitungsdurchmesser, an Biegeradien bzw. Kurvenformen, an beliebigen Höhen- und Tiefenunterschieden, sogar an unterschiedliche Leitungsdurchmesser einer einzigen Leitung entlang und sich der individuellen Länge der Leitung bzw. von Leitungen problemlos anpassen lässt, ohne dabei spezifisch für die vielzähligen Leitungsdurchmesser und den jeweiligen spezifischen Eigenschaften, eine eigene Leitungsschutzvorrichtung zu fertigen.
■ Es ermöglicht Hindernisse problemlos, ohne Sicherheitseinbussen, zu überbrücken.
■ Es ermöglicht die Montage und Abnahme, ohne Werkzeugeinsatz schnell und unkompliziert durchzuführen, vor allem ohne zwischenzeitliches Lösen eines Endes oder der Enden der Leitung bzw. der Leitungen.
■ Wiederverwendbar ist.
■ Es ermöglicht kostenintensive und zeitaufwendige Reparaturen, fatale Folgeschäden durch Tierverbiss sicher zu vermeiden und geplagte Autobesitzer vor erneuten Angriffen schützt.
■ Es ermöglicht den Ansprüchen des Marktes gerecht zu werden, die Wünsche der Kunden vor allem der Handhabung und Eigenschaften zu erfüllen und eine sofortige Kaufentscheidung zu ermöglichen, ohne dabei Herstellungskostenintensiv und Vermarktungsaufwendig zu sein.
■ Die erfindungsgemäße Vorrichtung eignet sich zum Schutz von Leitungen jeder Art z.B. Hochspannungszündleitungen, Kühlmittelleitungen, Kraftstoffschläuchen, Schläuchen und Schlauchleitungen für Treibgasanlagen, Niederspannungskabeln, Bremsschläuchen, Schläuchen an Vergasern und Einspritzsystemen, Leitungen für Klimaanlagen, Schläuchen für Scheibenwaschanlagen, Elektroleitungen, diversen Schläuchen, Antennenkabeln und vielem mehr.
■ Die erfindungsgemäße Vorrichtung eignet sich zur Umhüllung von einer und mehreren Leitungen, jeglicher Art, zur farblichen Veränderung und optischen Verschönerung.
■ Die erfindungsgemäße Vorrichtung eignet sich zur Bündelung von Leitungen jeder Art z.B. als Kabelkanal zur Bündelung von Computerkabeln, Telefonkabel, Faxkabel, Stromkabel, Druckerkabel, Kabel von Fernsehgeräten, Stereoanlagen und vielem mehr.

Die nachfolgenden Beispiele sollen die vorliegende Erfindung unter Bezugnahme auf die Zeichnungen verdeutlichen, ohne sie einzuschränken, in diesen **zeigen:**
- Fig. 1a, 1b und 1c: jeweils eine Perspektivansicht von einem Schutzmantelsegment, in verschiedenen Ausführungen der Körperform.
- Fig. 1d, 1e und 1f: jeweils eine Vorderansicht eines Schutzmantelsegmentes, in verschiedenartigen Ausbildungen.
- Fig. 1g: eine Vorderansicht eines Schutzmantelsegmentes, in Kombination von verschiedenen Ausbildungen.
- Fig. 1h und 1i: jeweils eine Vorderansicht bzw. Perspektivansicht von zwei Schutzmantelsegmenten, in Kombination von verschiedenartigen Ausbildungen.
- Fig. 1j: eine Vorderansicht bzw. Perspektivansicht von zwei Schutzmantelsegmenten.
- Fig. 2a und 2c: jeweils eine Seitenansicht einer Ausführungsart einer Abstandhalterung bzw. von Abstandshalterungen.
- Fig. 2b und 2d: eine Seitenansicht bzw. Perspektivansicht einer Leitungsschutzvorrichtung mit verschiedenen Ausführungsarten einer Abstandshalterung bzw. von Abstandshalterungen.
- Fig. 2e, 2g und 2i: eine Seitenansicht bzw. Perspektivansicht von Variationsmöglichkeiten von einem oder mehreren Abstandshhalterungen.
- Fig. 2f, 2h und 2j: eine Unteransicht der Fig. 2e, 2g und 2i
- Fig. 3a: eine Seitenansicht bzw. Perspektivansicht einer Variante einer Vorrichtung zur individuellen Anpassung an die unterschiedlichsten Durchmesser.

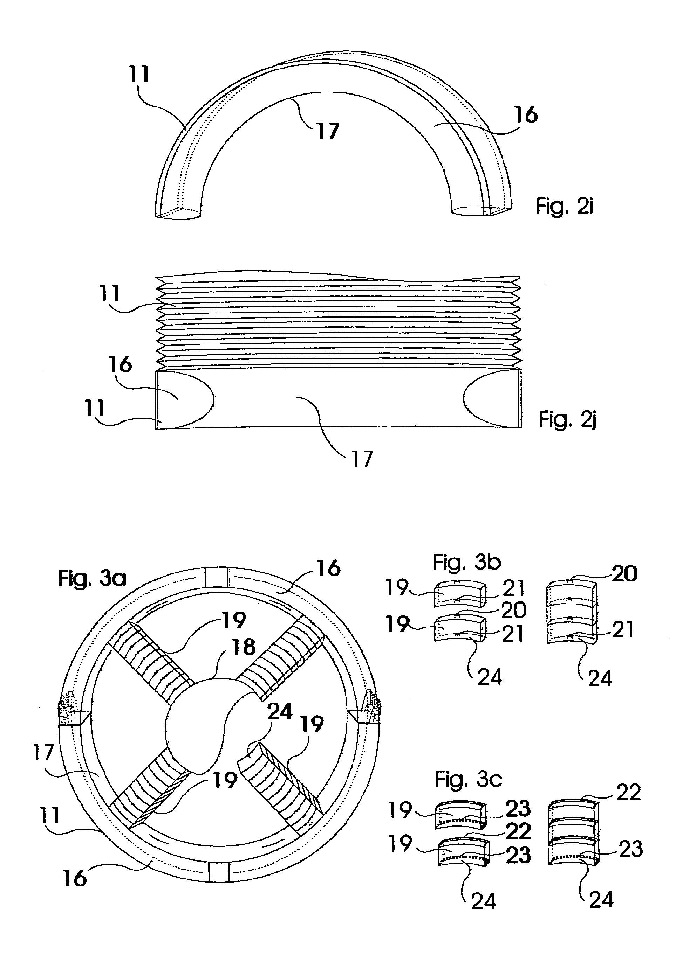

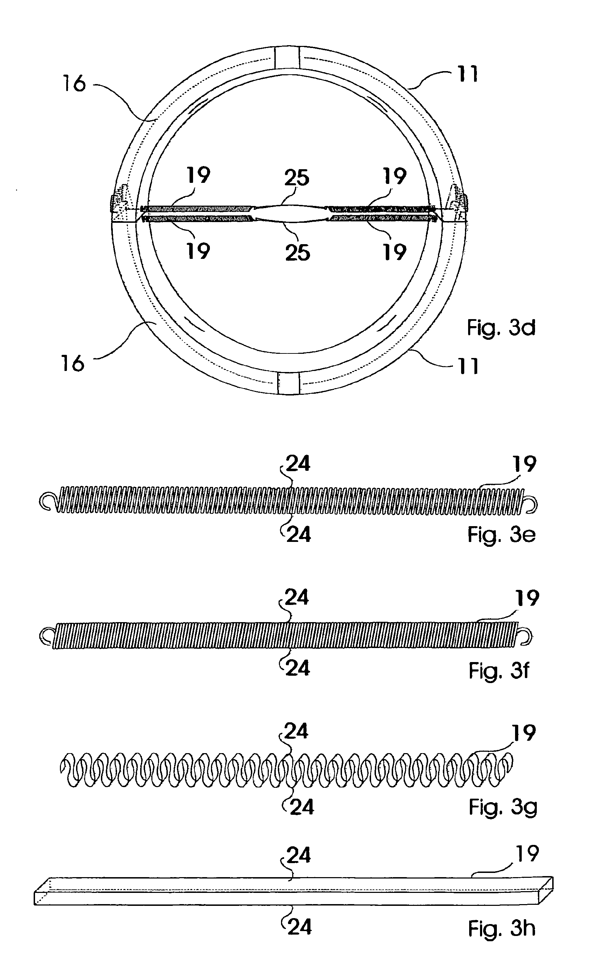

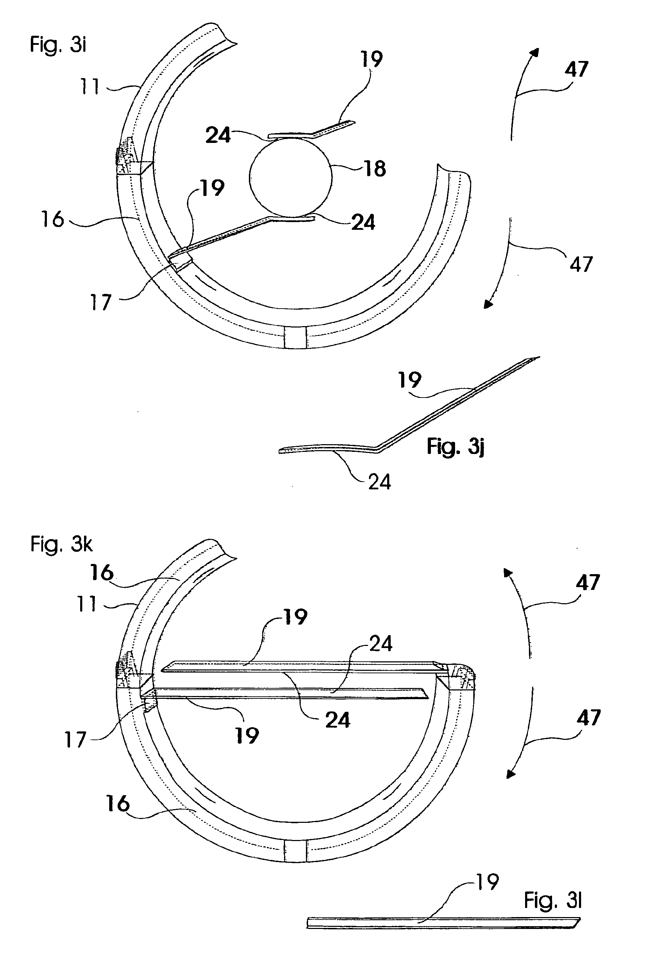

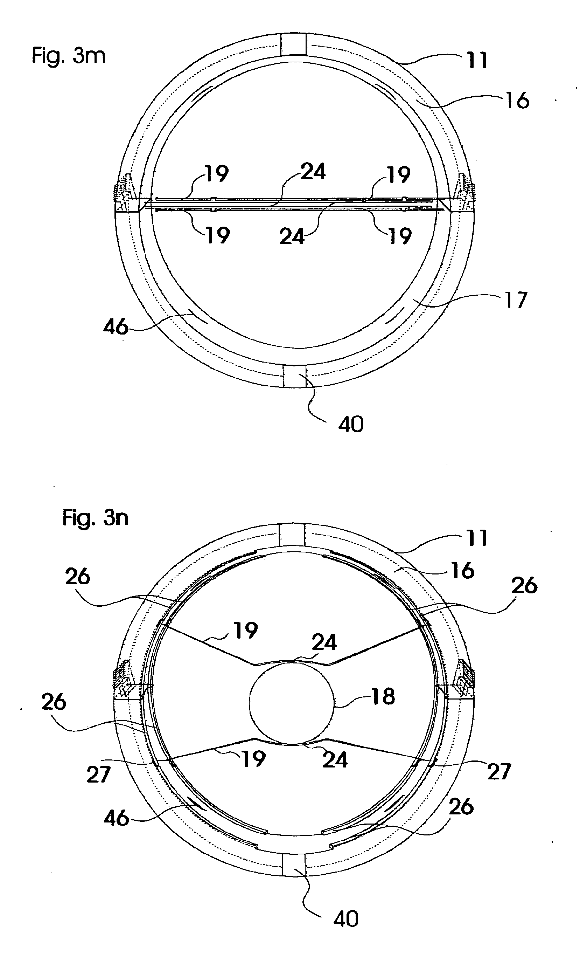

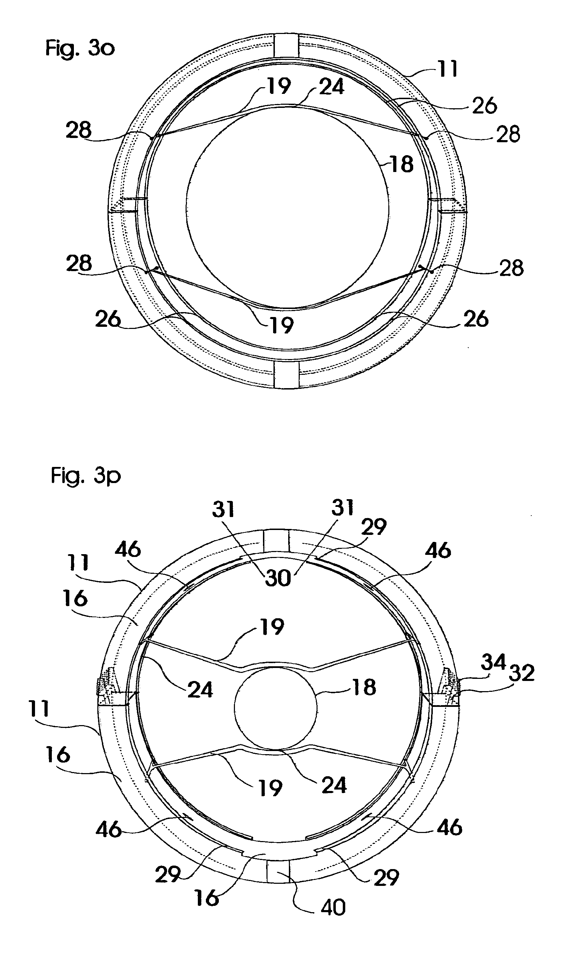

- Fig. 3 b und 3c: eine Seitenansicht bzw. perspektivische Detailansicht jeweils einer Variante einer Vorrichtung zur individuellen Anpassung an die unterschiedlichsten Durchmesser.
- Fig. 3d, 3i, 3k, 3m, 3n, 3o und 3p: eine Seitenansicht bzw. Perspektivansicht jeweils einer Variante einer Vorrichtung zur individuellen Anpassung an die unterschiedlichsten Durchmesser.
- Fig. 3e, 3f, 3g, 3h, 3j und 31: jeweils eine perspektivische Detailansicht, einer Variante einer Vorrichtung zur individuellen Anpassung an die unterschiedlichsten Durchmesser.

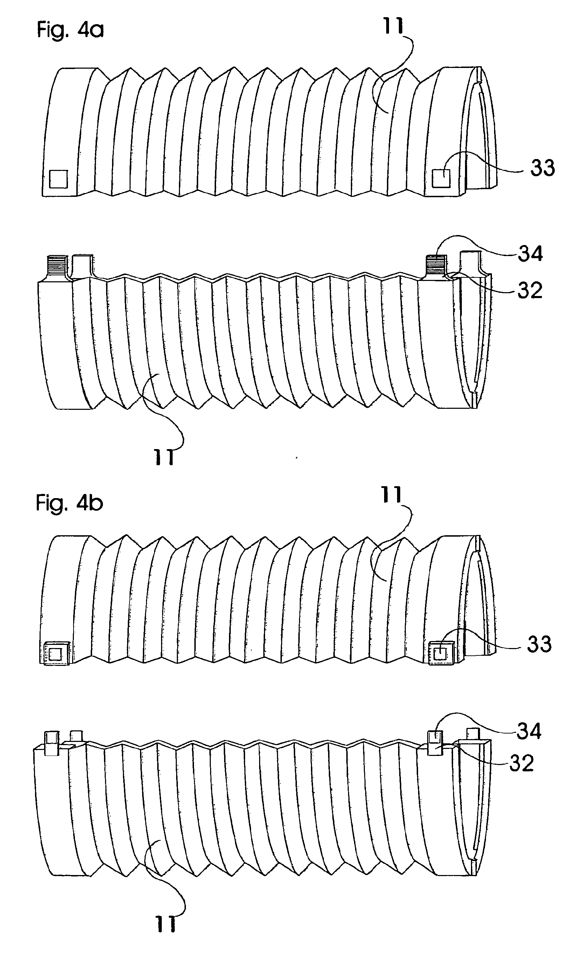

- Fig. 4a und 4b: jeweils eine Vorderansicht bzw. Perspektivansicht von zwei Schutzmantelsegmenten, mit werkseitig eingearbeiteten bzw. werkseitig vormontierten Verschlussmöglichkeiten.

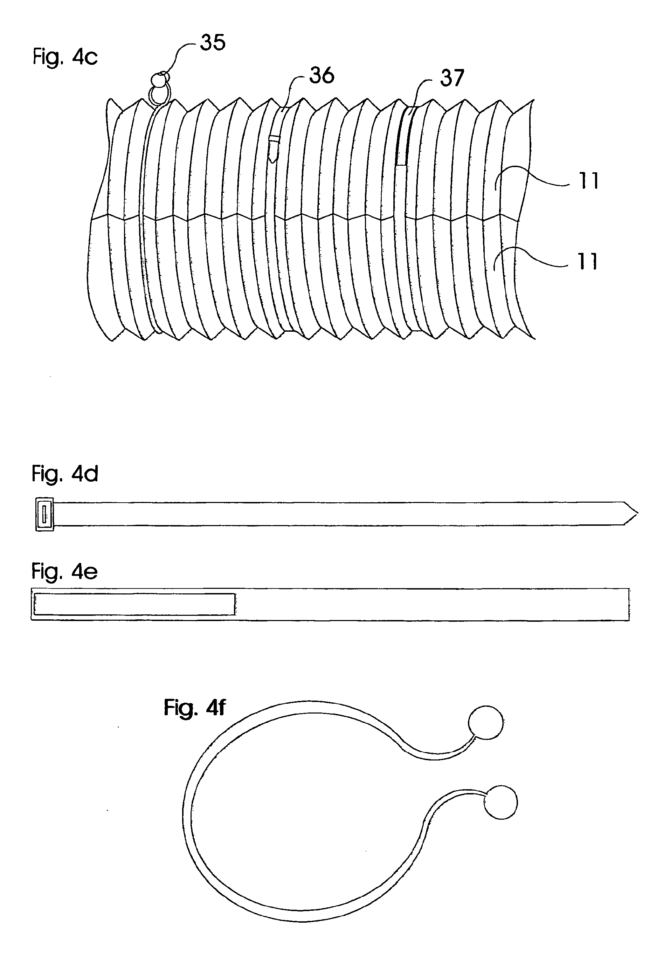

- Fig. 4c: eine Vorderansicht von zwei Schutzmantelsegmenten mit, extern angebrachten Verschlussmöglichkeiten.
- Fig. 4d, 4e und 4f: jeweils eine Draufsicht von externen Verschlussmöglichkeiten.

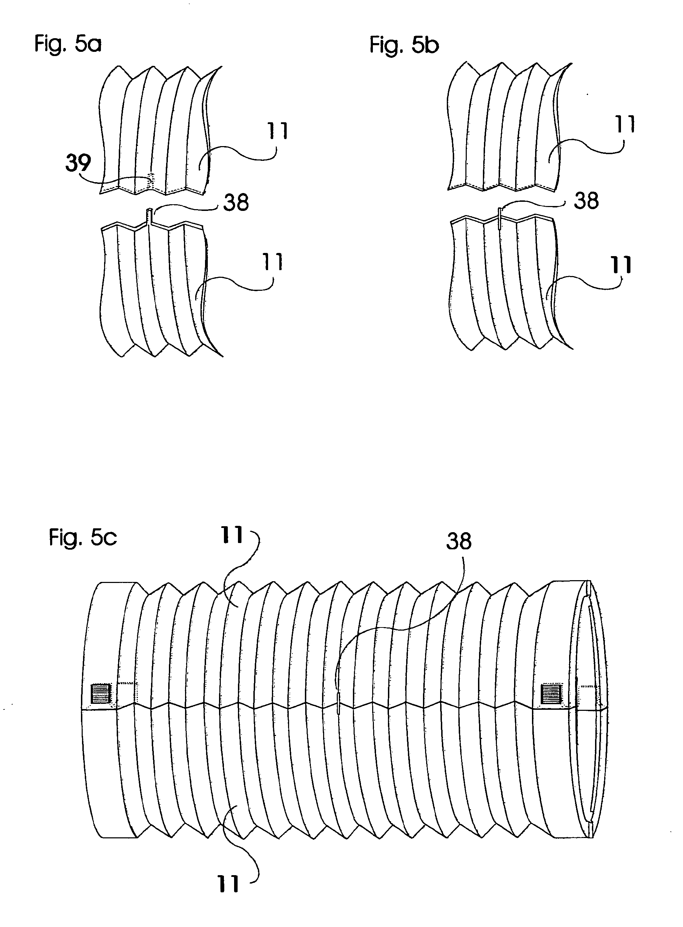

- Fig. 5 a und 5b: eine Vorderansicht bzw. eine Detailansicht von jeweils zwei Schutzmantelsegmenten, mit verschiedenen Ausführungsarten einer Vorrichtung, welche ein seitliches verrutschen verhindert.
- Fig. 5c: eine Vorderansicht bzw. Perspektivansicht einer Leitungsschutzvorrichtung im zusammengestecktem Zustand, mit einer Ausführungsart einer Vorrichtung, welche ein seitliches verrutschen verhindert.

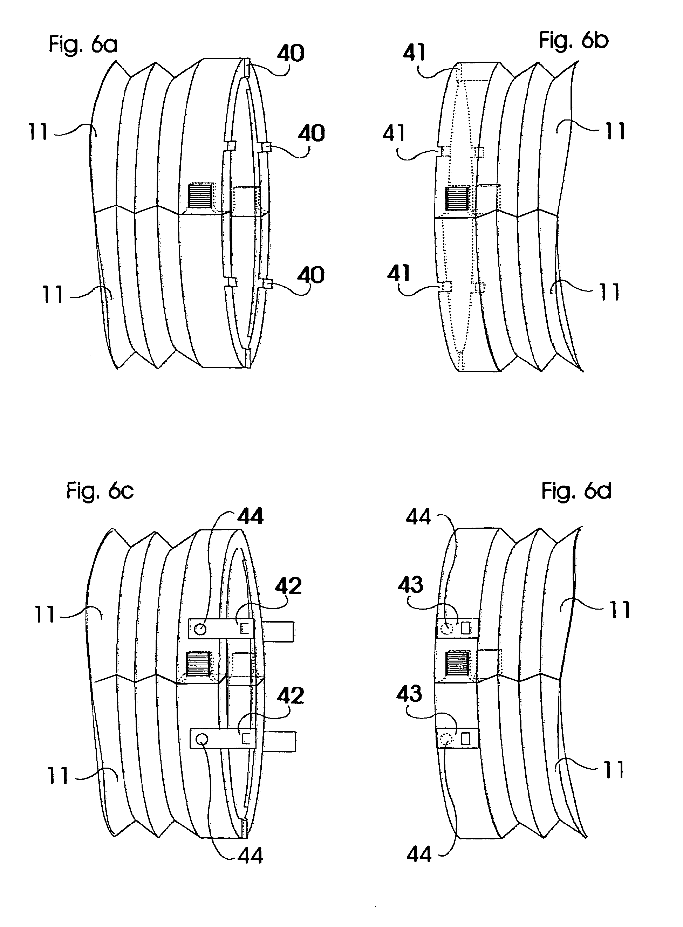

- Fig. 6a, 6b, 6c und 6d: jeweils eine Vorderansicht bzw. Perspektivansicht von jeweils zwei miteinander verbundenen Schutzmantelsegmenten, welche mit verschiedenen Ausführungsarten einer Vorrichtung zur Aneinanderreihung bzw. zur Verbindung benachbarter, unmittelbar angrenzender Schutzmäntel eingearbeitet bzw. werkseitig vormontiert sind.

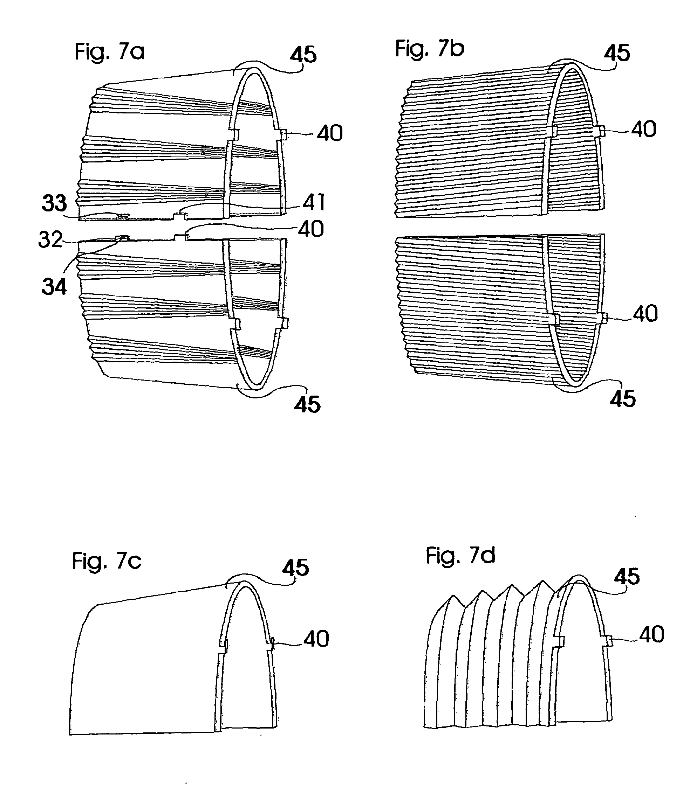

- Fig. 7a, 7b, 7c und 7d: jeweils eine Vorderansicht bzw. Perspektivansicht von ein oder mehrere Abschlussschutzmantelsegmenten, wovon Fig. 7a zusätzlich verschiedene Ausführungsarten einer Vorrichtung des miteinander Verbindens bzw. des miteinander verschliessen aufzeigt.

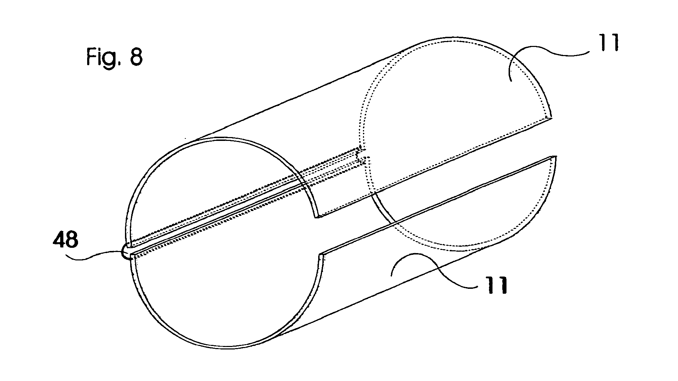

- Fig. 8: eine Perspektivansicht von zwei halbkreisförmigen Körperformen, welche mittels einer Prägung miteinander beweglich verbunden sind.

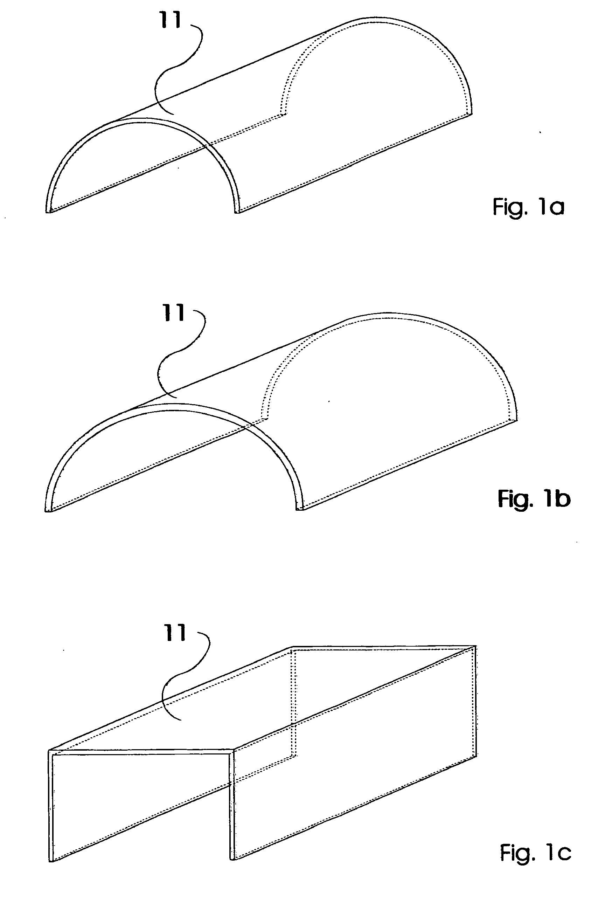

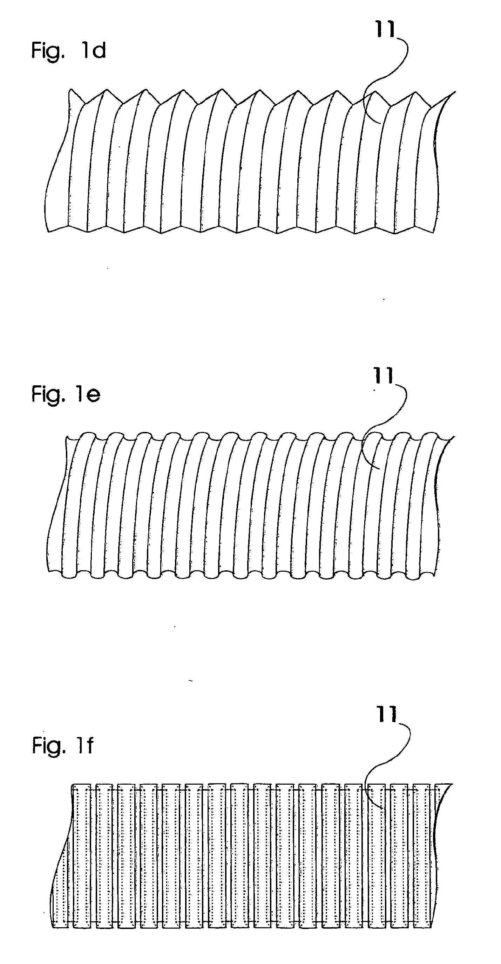

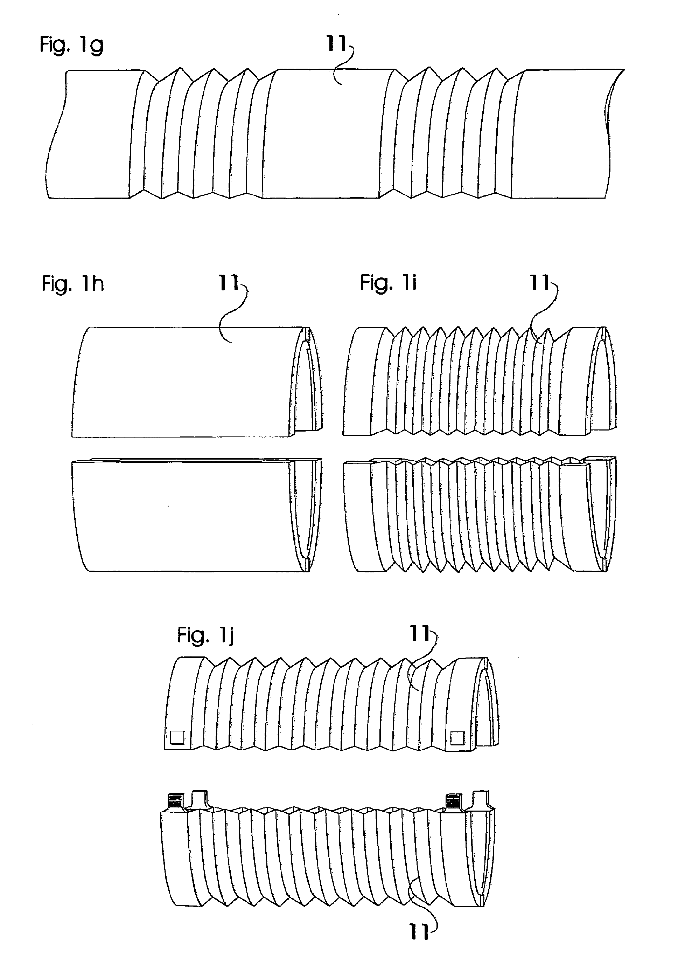

Die Aufgabe wird gelöst durch mindestens einen Schutzmantel und/oder mehreren Schutzmäntel und/oder mehreren Schutzmantelsegmenten, welcher bzw. welche in beliebiger Länge- und Durchmessergestaltung, in jeglicher Körperform z.B. eines Halbkreises (Fig. 1a), Viertelbogen, Bogenförmig, C-Förmig, Ellipsenförmig, Halb-Ellipsenförmig (Fig. **1b****)**, in regelmäßigen und unregelmäßigen Vielecken (Fig. 1c) ausgeführt sein kann bzw. können. Wobei der Schutzmantel und/oder die Schutzmäntel und/oder die Schutzmantelsegmente in jeglicher Art ausgebildet sein kann bzw. können z.B. ziehharmonikaförmig (Fig. 1d), gewellt (Fig. 1e), glatt (Fig. 1h), quergerippt, trapezförmig (Fig. 1f), rechteckig und diese Ausbildungen, in beliebiger Anordnung verlaufen können z.B. vertikal, horizontal, diagonal. Sowie der Schutzmantel und/oder die Schutzmäntel und/oder die Schutzmantelsegmente in beliebiger Kombination bzw. Kombinationen der Körperform, der Ausbildung, der Anordnung, der Länge und Durchmesser ausgeführt sein kann bzw. können.

Fig. 1g, 1h, 1i und 1j zeigen Beispiele solcher Ausführungsarten an einem und mehreren Schutzmantelsegmenten, in beliebiger Ausbildung, Anordnung und Kombinationsmöglichkeiten.

Fig. 1g zeigt ein halbkreisförmiges Schutzmantelsegment, in Kombination von glatter und ziehharmonikaförmiger Ausbildung, wobei die ziehharmonikaförmigen ausgebildeten Abschnitte senkrecht verlaufen.

Fig. 1h und Fig. 1i zeigen jeweils zwei halbkreisförmige Schutzmantelsegmente. Fig. 1h zeigt ein Beispiel von zwei Schutzmantelsegmenten in glatter Ausbildungsart, welche zum Schutze von gerade verlaufenden Abschnitten einer und mehreren Leitungen geeignet sind. Fig. 1i zeigt ein Beispiel von zwei Schutzmantelsegmenten, in ziehharmonikaförmiger Ausbildung, senkrecht verlaufen, mit glatt ausgebildeten Stirnseiten, welche zum Schutze von Abschnitten einer und mehreren Leitungen mit beliebiger Kurvenform geeignet sind.

Fig. 1j zeigt zwei halbkreisförmige Schutzmantelsegmente, in ziehharmonikaförmiger Ausbildung, senkrecht verlaufen, mit glatter Ausbildung der Enden bzw. der Stirnseiten.

Insbesondere wird die Form des Halbkreises für mehrere Schutzmantelsegmente bevorzugt, welche beweglich ausgebildet sind z.B. ziehharmonikaförmig, gewellt und vorzugsweise an den Stirnseiten bzw. an den Enden in glatter Ausbildung enden.

Um die weitere Formulierung in dieser Patentschrift zu vereinfachen soll der Begriff "Schutzmantel" für einen Schutzmantel, für mehrere Schutzmäntel und für beliebige Anzahl von Schutzmantelsegmenten stehen.

Der Schutzmantel kann mit einem und/oder mehreren Abstandshalterungen versehen sein, wobei dann der Schutzmantel und ein Abstandshalter und/oder mehrere Abstandshalterungen jeweils auf die zu schützende Leitung bzw. Leitungen, wieder lösbar aufgesteckt werden und die zu schützende Leitung bzw. Leitungen umfänglich umgeben und zumindest entlang eines Abschnittes der Leitung bzw. der Leitungen zwischen der zu schützenden Leitung bzw. den Leitungen und dem Schutzmantel ein Hohlraum (Sicherheitsabstand) erzeugt wird.

Erfindungsgemäß kann also ein Abstandshalter und/oder mehrere Abstandshalterungen vorhanden sein, welche aus einer beliebigen Körperform und/oder mehreren beliebigen Körperformen ausgeführt sein kann bzw. können, welcher bzw. welche beliebig am oder im Schutzmantel platziert und auf jede Art und Weise befestigt, sowie werkseitig eingearbeitet, werkseitig vormontiert oder zur Montage beliegen kann bzw. können.

Der Abstandshalter und/oder die Abstandshalterungen, ist dadurch gekennzeichnet, das dieser oder diese entlang eines Abschnittes der Leitung bzw. der Leitungen, zwischen der Leitung bzw. den Leitungen und dem Schutzmantel, im montierten Zustand, ein Hohlraum (Sicherheitsabstand), beliebigen Maßes, erzeugt bzw. erzeugen. Wobei die Auflagefläche bzw. Auflageflächen des Abstandshalters und/oder der Abstandshalterungen im montierten Zustand die Leitung nicht unbedingt berühren muss.

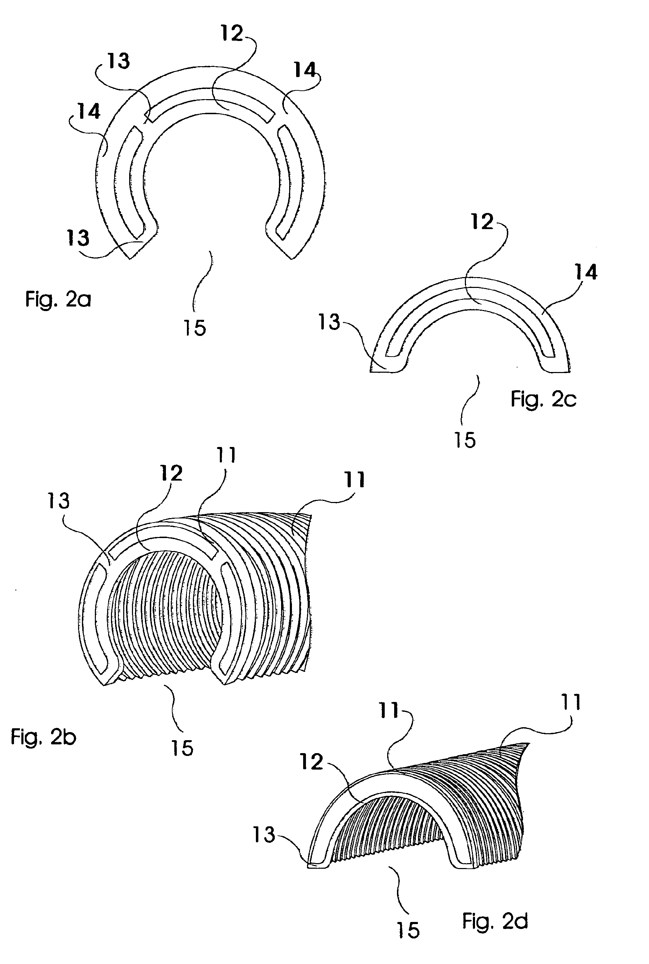

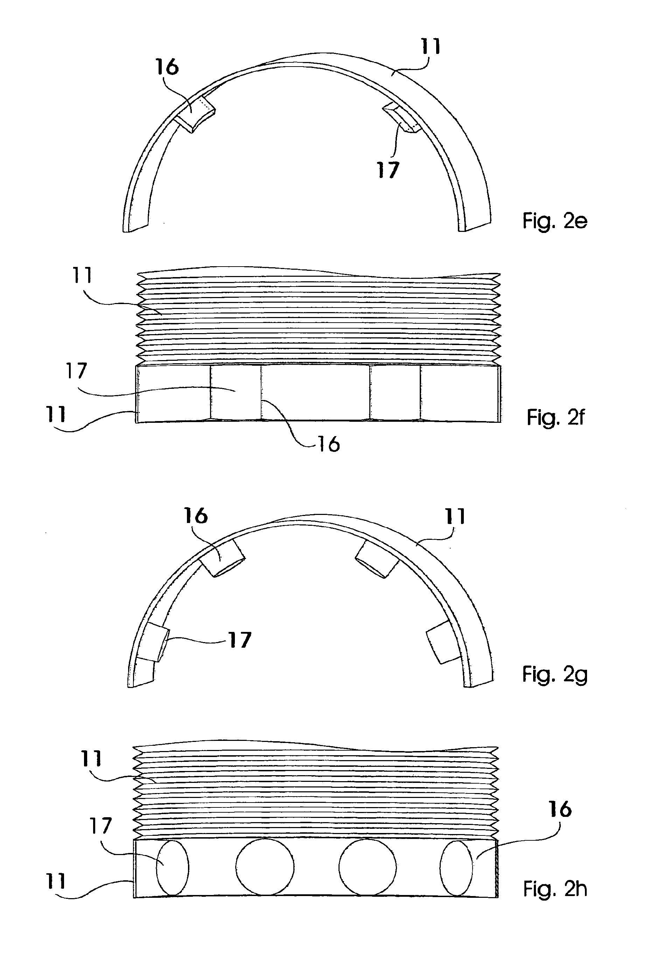

Fig. 2a, 2b, 2c, 2d, 2e, 2f, 2g, 2h, 2i, und 2j zeigen nur eine geringe Anzahl von Beispielen der vielzähligen Ausführungsmöglichkeiten eines und/oder mehreren Abstandshalterungen, wovon Fig. 2f, 2h und 2j eine Perspektivansicht bzw. Unteransicht der Fig. 2e, 2g und 2i zeigen.

Fig. 2a und Fig. 2c zeigen jeweils eine Abstandshalterung. Diese Ausführungsart des Abstandshalters besitzt mindestens einen Klammerring 12, welcher in beliebiger Form z.B. eines Halbkreises (Fig. 2c), Viertelbogen, Bogenförmig, C-Förmig (Fig. 2a), Ellipseförmig, Halbellipsenförmig, in regelmäßigen und unregelmäßigen Vielecken ausgeführt sein kann, der mit mindestens einer oder mehreren Abstandsrippen 13 mit einem äußeren Anlegering 14, welcher in beliebiger Form z.B. eines Halbkreises (Fig. 2c), Viertelbogens, Bogenförmig, C-Förmig (Fig. 2a), Ellipseförmig, Halbellipsenförmig, in regelmäßigen und unregelmäßigen Vielecken ausgeführt sein kann und eine Aufnahmeöffnung 15 zur Montage auf die zu schützende Leitung bzw. auf die zu schützenden Leitungen besitzt.

Fig. 2b und 2d zeigen jeweils eine Abstandshalterung. Diese Ausführungsart des Abstandshalters besitzt mindestens einen Klammerring 12, welcher in beliebiger Form z.B. eines Halbkreises (Fig. 2d), Viertelbogen, Bogenförmig, C-Förmig (Fig. 2b), Ellipseförmig, Halbellipsenförmig, in regelmäßigen und unregelmäßigen Vielecken ausgeführt sein kann, der mit mindestens einer oder mehreren Abstandsrippen 13 direkt in der Innenseite am und/oder im Schutzmantel 11 (ohne Anlegering 14) angebracht ist und eine Aufnahmeöffnung 15 zur Montage besitzt.

Fig. 2e und Fig. 2g zeigen eine weitere Ausführungsart von mehreren Abstandshalterungen 16, welche aus mehreren beliebig geformten Körpern bestehen, hier z.B. in Form von Rechtecken (Fig. 2e) und Zylindern (Fig. 2g). Die beliebig geformten Körper können an oder in der Innenseite des Schutzmantels 11, senkrecht, waagrecht oder diagonal angeordnet sein. Wobei die Enden der beliebig geformten Körper, die Auflagefläche bzw. Auflageflächen 17 zu der zu schützenden Leitung darstellen. Die Auflagefläche bzw. Auflageflächen 17 können leicht bogenförmig ausgeprägt sein, um eine optimale Anpassung an der zu schützenden Leitung bzw. an den zu schützenden Leitungen zu erhalten, wobei die Auflagefläche bzw. die Auflageflächen, die zu schützende Leitung bzw. Leitungen nicht berühren muss.

Fig. 2i zeigt eine weitere Ausführungsart, eines Abstandshalters, in beliebiger Körperform an der Innenseite des Schutzmantel 11 verlaufend, hier z.B. in Form einer Halbellipse 16. Wobei der verlaufende Köper die Auflageflächen 17 zu der zu schützenden Leitung bzw. den zu schützenden Leitungen bildet, diese jedoch nicht berühren muss.

Fig. 2f zeigt die Unteransicht der Fig. 2e, Fig. 2h zeigt die Unteransicht der Fig. 2g und Fig. 2j zeigt die Unteransicht der Fig. 2i.

Fig. 3p zeigt eine Variante, der bevorzugten Ausführungsarten, von mehreren Abstandshalterungen. Fig. 3p zeigt zwei Abstandshalterungen 16, bestehend aus jeweils einem Quadratischen Körper an der Innenseite des Schutzmantels 11 verlaufend.

Um das bestehende Probleme der individuellen Anpassung, der Leitungsschutzvorrichtung, an die vielzähligen Leitungsdurchmesser der zu schützenden Leitung bzw. Leitungen zu lösen, ohne dabei spezifisch für die vielzähligen Leitungsdurchmesser und den jeweiligen spezifischen Eigenschaften eine eigene Leitungsschutzvorrichtung zu fertigen, ist es von Vorteil, eine Vorrichtung zu schaffen, welche eine individuelle Anpassung an die unterschiedlichsten Leitungsdurchmesser ermöglicht.

Eine solche Vorrichtung zur individuellen Anpassung an die unterschiedlichsten Durchmesser, bringt zugleich die Vorteile einer perfekten Passform und Haltbarkeit, an geraden und beliebigen Kurvenformen mit sich. Vor allem löst diese das Problem der Überbrückung von unterschiedlichsten Durchmessern an einer einzigen Leitung entlang. Weitere Vorteile bestehen in der Entgegenwirkung von Geräuschentwicklung, der Regulierbarkeit von Engstellen und der Geringhaltung der Herstellungskosten.

Die bevorzugte Ausführungsart der Leitungsschutzvorrichtung beinhaltet ein oder mehrere Abstandshalterungen und eine oder mehrere Vorrichtungen zur individuellen Anpassung an die Unterschiedlichsten Leitungsdurchmesser. In diesem Fall kommt die Vorrichtung zur individuellen Anpassung zum Einsatz, wenn der Außendurchmesser der zu schützenden Leitung oder der Leitungen, nicht dem Innendurchmesser der Leitungsschutzvornchtung (Schutzmantel mit Abstandshalter) entspricht. Je nach Ausführungsart dieser Vorrichtung zur individuellen Anpassung an die unterschiedlichsten Durchmesser, wird z.B. durch das Hinzufügen oder Lösen dieser Vorrichtung der benötige Durchmesser eingestellt und/oder durch eine oder mehrere eingebaute bzw. werkseitig vormontierte oder anzubringende Vorrichtungen, die bei Montage der Leitungsschutzvorrichtung, durch das Volumen der zu schützenden Leitung einen Mechanismus auslöst bzw. diese Vorrichtung sich so verändert, das die Leitungsschutzvorrichtung, an der zu schützenden Leitung bzw. den Leitungen, fixiert wird.

Entspricht der Außendurchmesser der zu schützenden Leitung bzw. der Leitungen, dem Innendurchmesser der Leitungsschutzvorrichtung, wird die Vorrichtung zur individuellen Anpassung an die unterschiedlichsten Durchmesser nicht benötigt d.h. diese wird nicht montiert oder abgenommen, wenn diese wieder lösbar vormontiert ist. In diesem Fall ist die Leitungsschutzvorrichtung (Schutzmantel mit Abstandshalter) alleinig anzubringen, wobei die Auflagefläche des oder der Abstandshalterungen direkten Kontakt mit der zu schützenden Leitung aufweist. In diesem Falle erzeugt der Abstandshalter oder die Abstandshalterungen zwischen der zu schützenden Leitung bzw. der Leitungen und dem Schutzmantel einen Hohlraum (Sicherheitsabstand), zumindest entlang eines Abschnittes der zu schützenden Leitung bzw. der zu schützenden Leitungen.
Ist aber die Vorrichtung zur individuellen Anpassung an die unterschiedlichsten Durchmesser nicht wieder lösbar angebracht, so wird diese immer verwendet.

Die Vorrichtung zur individuellen Anpassung an die unterschiedlichsten Durchmesser bzw. die Vorrichtungen zur individuellen Anpassung an die unterschiedlichsten Durchmesser, ist dadurch gekennzeichnet, das diese eine individuelle Anpassung und Fixierung der Leitungsschutzvorrichtung bzw. Leitungsschutzvorrichtungen an die unterschiedlichsten Leitungsdurchmesser und deren jeweiligen spezifischen Eigenschaften, der zu schützenden Leitung bzw. von Leitungen ermöglicht. Wobei die Vorrichtung bzw. die Vorrichtungen zur individuellen Anpassung an die unterschiedlichsten Durchmesser, auf jede Art und Weise ausgeführt, beliebig angeordnet, beliebig an oder in allen Elementen dieser Leitungsschutzvorrichtung bzw. Leitungsschutzvorrichtungen platziert und befestigt sein kann bzw. können, sowie werkseitig eingearbeitet, werkseitig vormontiert oder zur Montage beliegen können. Wobei zur Befestigung der Vorrichtung bzw. der Vorrichtungen zur individuellen Anpassung an die unterschiedlichsten Durchmesser, zusätzlich eine Vorrichtung bzw. Vorrichtungen vorhanden sein kann bzw. können, welche eine bestimmte Funktion ermöglicht. Diese Vorrichtung bzw. Vorrichtungen zur Befestigung kann bzw. können auf jede Art und Weise ausgeführt, beliebig angeordnet, beliebig in oder an allen Elementen dieser Leitungsschutzvorrichtung bzw. Leitungsschutzvorrichtungen platziert und befestigt sein, sowie werkseitig eingearbeitet, werkseitig vormontiert oder zur Montage beiliegen können.

Eine mögliche Ausführungsart einer Vorrichtung bzw. von Vorrichtungen zur individuellen Anpassung an die unterschiedlichsten Durchmesser kann aus mehreren beliebig geformten Körper bestehen, welche an oder in der Innenseite des Schutzmantels und/oder am oder im Abstandhalter und/oder an oder in den Abstandshalterungen, wieder lösbar, in beliebiger Anordnung angebracht werden z.B. senkrecht, diagonal, waagrecht. Die Befestigung der einzelnen Körper kann auf jede Art und Weise erfolgen. Durch das Hinzufügen oder Lösen der einzelnen Körper, wird der Innendurchmesser individuell verringert oder vergrößert und somit eine individuelle Durchmessereinstellung ermöglicht.
Fig. 3a zeigt ein Beispiel einer solchen Ausführungsart einer Vorrichtung zur individuellen Anpassung an die unterschiedlichsten Durchmesser im montierten Zustand, an einer zu schützenden Leitung 18, bestehend aus rechteckig geformten Körpern 19, vorzugsweise in bogenförmiger Ausbildung der Auflagefläche 24, um eine bessere Anpassung, an der zu schützenden Leitung bzw. an den Leitungen zu erhalten. Welche zum Beispiel mittels eines Stecksystem (Fig. 3b), bestehend aus Nasen 20 und jeweiligen dazugehörigen Gegenvertiefung 21 oder mittels eines Schiebsystems (Fig. 3c) bestehend aus eingearbeiteten Schienen 22 und jeweiligen Gegenvertiefungen 23, am Abstandshalter oder Schutzmantel, hier z.B. diagonal, befestigt werden. Durch das Lösen oder Hinzufügen der einzelnen Körper 19, wird der Innendurchmesser reduziert oder vergrößert, somit eine Durchmessereinstellung, bis zum gewünschten Außendurchmesser der zu schützenden Leitung bzw. Leitungen ermöglicht. Wobei jeweils der beliebig geformte Körper, der sich mit einer Fläche bzw. der Grundfläche zur Leitung richtet bzw. bei Montage auf der Leitung aufliegt, die Auflagefläche 24 darstellt.

Eine weitere mögliche Ausführungsart einer Vorrichtung bzw. von Vorrichtungen zur individuellen Anpassung an die unterschiedlichsten Durchmesser kann aus der Verwendung eines oder mehreren flexiblen bzw. elastischen Materialien und/oder von nicht elastischen Materialien, welche durch die Formgebung eine Elastizität erhielt bzw. erhielten, erfolgen. Das flexible bzw. elastische Material oder die Formgebung mit elastischer Eigenschaft, wird jeweils an den Enden am oder im Abstandshalter und/oder in oder an den Abstandshalterungen und/oder an oder in der Innenseite des Schutzmantels platziert. Bei Montage der Leitungsschutzvorrichtung wird die Ausführungsart einer Vorrichtung zur individuellen Anpassung an die unterschiedlichsten Durchmesser, die in der Leitungsschutzvorrichtung verläuft, durch das Volumen der Leitung bzw. der Leitungen, in Richtung des Schutzmantel gedrückt. Durch die entstandene Spannung wird die Leitungsschutzvorrichtung, an der zu schützenden Leitung bzw. den Leitungen fixiert. Die Befestigung dieser Vorrichtung am oder im Schutzmantel und/oder an oder in einem Abstandshalter und/oder an oder in den Abstandshalterungen, kann auf jede Art und Weise erfolgen, sowie werkseitig eingearbeitet, werkseitig vormontiert sein oder zur Montage beiliegen.

Fig. 3d, 3e, 3f, 3g und 3h zeigen Beispiele solcher Ausführungsarten einer Vorrichtung bzw. von Vorrichtungen zur individuellen Anpassung an die unterschiedlichsten Durchmesser.

Fig. 3d zeigt zwei miteinander befestigte Schutzmantelsegmente 11, mit zwei Abstandshalterungen 16, welche auf der Innenseite eines jeden Schutzmantelsegmentes 11 verlaufen. Die Vorrichtung zur individuellen Anpassung an die unterschiedlichsten Durchmesser 19, hier in Ausführungsart von zwei Federn werden, jeweils an den gegenüberliegenden Seiten am oder im Abstandshalter und/oder an oder in den Abstandshalterungen und/oder an oder in der Innenseite des Schutzmantels, jeweils parallel zueinander platziert. Die Feder bzw. die Vorrichtung zur individuellen Anpassung an die unterschiedlichsten Durchmesser 19, kann zusätzliche mit einer Auflagefläche, jeglicher Form z.B. hier in Form eines Rechteckes 25, in leichter bogenförmiger Ausbildung, versehen werden. Ist keine zusätzliche Auflagefläche eingearbeitet, stellen die zwei Federn, selbst die Auflagefläche dar, jeweils mit der Fläche, welche die zu schützende Leitung berührt. Die Befestigung dieser Vorrichtung zur individuellen Anpassung an die unterschiedlichsten Durchmesser kann am oder im Schutzmantel und/oder am oder in dem Abstandshalter und/oder an oder in den Abstandshalterungen, auf jede Art und Weise erfolgen, sowie werkseitig eingearbeitet, werkseitig vormontiert oder zur Montage beiliegen.

Fig. 3e, 3f und 3g zeigen weitere Formgebungen mit elastischer Eigenschaft. Fig. 3e zeigt eine Schrauben-Druckfeder, Fig. 3f zeigt eine Schrauben-Zugfeder. Fig. 3g zeigt ein Material in gewellter Form.

Fig. 3h zeigt ein Beispiel eines verwendbaren elastischen Materials, in der Ausführungsart eines breit ausgebildeten Gummis.

Eine weitere mögliche Ausführungsart einer Vorrichtung bzw. von Vorrichtungen zur individuellen Anpassung an die unterschiedlichsten Durchmesser kann aus mehreren beliebig geformten Körpern bestehen, welche an einer Seite, am oder in einem Abstandshalter und/oder in oder an den Abstandshalterungen und/oder in oder am Schutzmantel, platziert werden. Die Befestigung kann auf jede Art und Weise erfolgen, sowie werkseitig eingearbeitet, werkseitig vormontiert oder zur Montage beiliegen. Die andere Seite des bzw. der beliebig geformten Körper, endet frei, im Innenleben der Leitungsschutzvorrichtung. Unter der Vorraussetzung, das im montierten Zustand, der Leitungsschutzvorrichtung, der Körper, mit der frei endenden Seite bzw. Fläche, mit der zu schützenden Leitung bzw. den Leitungen ein Kontakt herstellt. Durch das Volumen der zu schützenden Leitung bzw. der Leitungen wird die Ausführungsart einer Vorrichtung zur individuellen Anpassung an die unterschiedlichsten Durchmesser durch das Volumen der Leitung bzw. der Leitungen, in Richtung des Schutzmantels gedrückt. Durch die entstandene Spannung wird die Leitungsschutzvorrichtung an der zu schützenden Leitung bzw. an den Leitungen fixiert.

Fig. 3i, 3j, 3k und 3l zeigen Beispiele solcher Ausführungsarten, einer Vorrichtung bzw. von Vorrichtungen zur individuellen Anpassung an die unterschiedlichsten Durchmesser, wovon Fig. 3j und 3l eine Detailansicht zeigen.

Fig. 3i zeigt eine Seitenansicht bzw. Detailansicht von zwei Schutzmantelsegmenten 11, mit zwei Abstandshalterungen 16, an einer zu schützenden Leitung 18 montiert. Die Vorrichtung zur individuellen Anpassung an die unterschiedlichsten Durchmesser 19, hier bestehend aus zwei flexiblen Körper, in jeweiliger Form eines Rechteckes, mit jeweils einem abgewinkelten Ende und einem leicht bogenförmigen ausgeprägten Ende. Das abgewinkelte Ende wird am oder im Abstandshalter und/oder an oder in den Abstandshalterungen 16 und/oder am oder im Schutzmantel durch Einstecken befestigt. Das Ende mit bogenförmiger Ausprägung endet frei im Innenleben der Leitungsschutzvorrichtung. Nr. 24 zeigt, die jeweilige Auflagefläche, welche im montierten Zustand, durch das Volumen der zu schützenden Leitung, jeweils in Richtung 47 des Schutzmantels bzw. in Richtung der Leitungsschutzvorrichtung gedrückt wird. Durch die entstandene Spannung, wird die gesamte Leitungsschutzvorrichtung an der zu schützenden Leitung fixiert.

Fig. 3j zeigt eine Detailansicht, des Körpers, in Form eines Rechteckes, mit einem leicht bogenförmigen ausgeprägten Ende.

Fig. 3k zeigt eine Seitenansicht bzw. Detailansicht von zwei Schutzmantelsegmenten 11, mit zwei Abstandshalterungen 16, im zusammengestecktem Zustand, ohne zu schützender Leitung. Die Vorrichtung zur individuellen Anpassung an die unterschiedlichsten Durchmesser, hier bestehend aus jeweils zwei parallel angebrachten Biegungsfedern 19, die jeweils auf einer Seite am oder im Abstandshalter und/oder am oder in den Abstandshalterungen und/oder am oder im Schutzmantel platziert werden und im montierten Zustand frei im Innenleben der Leitungsschutzvorrichtung enden. Bei Montage der Leitungsschutzvorrichtung werden die zwei Biegungsfedern, durch das Volumen der zu schützenden Leitung bzw. der Leitungen, jeweils in Richtung 47 des Schutzmantels bzw. in Richtung der Leitungsschutzvorrichtung gedrückt. Durch die entstandene Spannung, wird die gesamte Leitungsschutzvorrichtung an der zu schützenden Leitung fixiert. Die Befestigung der Vorrichtung zur individuellen Anpassung an die unterschiedlichsten Durchmesser, wovon beliebig viele verwendet werden können, kann auf jede Art und Weise erfolgen, sowie werkseitig eingearbeitet, werkseitig vormontiert oder zur Montage beiliegen.

Fig. 3l zeigt eine Detailansicht einer Biegungsfeder.

Eine weitere mögliche Ausführungsart einer Vorrichtung bzw. von Vorrichtungen zur individuellen Anpassung an die unterschiedlichsten Durchmesser kann aus mehreren beliebig geformten und flexiblen Körpern bestehen, welche jeweils an einer Seite am oder im Abstandshalter und/oder an oder in den Abstandshalterungen und/oder am oder im Schutzmantel, auf jede Art und Weise befestigt werden, sowie werkseitig vormontiert, werkseitig eingearbeitet oder zur Montage beliegen können. Wobei vorzugsweise vier beliebig geformte Körper eine Einheit, einer Vorrichtung zur individuellen Anpassung an die unterschiedlichsten Durchmesser darstellen und von dieser Einheit beliebig viele verwendet werden können. In dieser Ausführungsart können z.B. jeweils zwei beliebig geformte und flexible Körpern mittels einer oder mehreren Verbindungsvorrichtung versehen sein, um den anderen Körper zu umgreifen und/oder jeder beliebig geformte und flexible Körper mit einer oder mehreren Verbindungsvorrichtungen versehen sein. Unter der Vorraussetzung, das jeweils zwei Körpern, durch ihre jeweilige bzw. jeweiligen Verbindungsvorrichtungen, welche sich im montierten Zustand oberhalb und unterhalb der zu schützenden Leitung bzw. von Leitungen befinden, durch das Volumen der Leitung bzw. der Leitungen eine Spannung ergeben, die wiederum eine Fixierung an die unterschiedlichsten Durchmesser einer schützenden Leitung bzw. von Leitungen ermöglicht.

Fig. 3m zeigt ein Beispiel einer solchen Ausführungsart einer Vorrichtung zur individuellen Anpassung an die unterschiedlichsten Durchmesser.

Fig. 3m zeigt eine Seitenansicht von zwei Schutzmantelsegmenten 11, mit zwei Abstandshalterungen 16, im zusammengestecktem Zustand, ohne zu schützender Leitung. Die Vorrichtung zur individuellen Anpassung an die unterschiedlichsten Durchmesser 19, hier bestehend aus jeweils vier flexiblen Körper, in Form eines Rechteckes in länglicher Ausbildung, wovon jeweils zwei flexible Körper mit zwei Käfig versehen sind und jeweils zwei flexiblen Körper an einem Ende so geformt sind, das diese bei gegenseitigem ineinander stecken ein Lösen verhindern.

Von dieser Vorrichtung zur individuellen Anpassung an die unterschiedlichsten Durchmesser werden, so angebracht, das diese bei Montage auf die zu schützenden Leitung, jeweils 2 miteinander verbundene Körper oberhalb der Leitung und jeweils 2 miteinander verbundene Körper sich unterhalb der zu schützenden Leitung bzw. der Leitungen befinden. Von dieser Vorrichtung bestehend aus 4 Körpern, können beliebig viele verwendet werden, wobei diese am oder in einem Abstandshalter und/oder in oder an mehreren Abstandshalterungen und/oder am oder im Schutzmantel platziert und auf jede Art und Weise befestigt, sowie werkseitig vormontiert, werkseitig eingearbeitet oder zur Montage beliegen können. Bei Montage der Leitungsschutzvorrichtung auf die zu schützende Leitung, wird durch das Volumen der zu schützenden Leitung bzw. der Leitungen, diese Vorrichtung bzw. Vorrichtungen zur individuellen Anpassung an die unterschiedlichsten Durchmesser, jeweils in Richtung des Schutzmantels gedrückt. Durch die entstandene Spannung, wird die gesamte Leitungsschutzvorrichtung an der zu schützenden Leitung bzw. Leitungen fixiert.

Eine weitere mögliche und bevorzugte Ausführungsart einer Vorrichtung bzw. von Vorrichtungen zur individuellen Anpassung an die unterschiedlichsten Durchmesser kann aus mehreren flexiblen bzw. elastischen Materialien, in beliebiger Körperform, bestehen. Die beliebig geformten Körper werden jeweils an den Enden am oder im Abstandshalter und/oder an oder in den Abstandshalterungen und/oder an oder in der Innenseite des Schutzmantels und/oder mittels einer speziellen Vorrichtung bzw. Vorrichtungen, die sich in oder am Abstandshalter und/oder in oder an den Abstandshalterungen und/oder am oder im Schutzmantel befindet, so befestigt bzw. angebracht, dass im montierten Zustand, die flexiblen bzw. elastischen Körper, die zu schützende Leitung bzw. die Leitungen berührt. Bei Montage der Leitungsschutzvorrichtung wird die Ausführungsart einer Vorrichtung bzw. die Vorrichtungen zur individuellen Anpassung an die unterschiedlichsten Durchmesser, die in der Leitungsschutzvorrichtung verläuft, durch das Volumen der Leitung, in Richtung des Schutzmantel gedrückt, wobei die Enden des oder der beliebig geformten Körper, die Position beibehalten und/oder ihre Position verändern können. Durch die entstandene Spannung wird die Leitungsschutzvorrichtung, an der zu schützenden Leitung fixiert. Die Befestigung dieser Vorrichtung bzw. der Vorrichtungen zur individuellen Anpassung an die unterschiedlichsten Durchmesser kann auf jede Art und Weise erfolgen, sowie eine spezielle bzw. zusätzliche Vorrichtung bzw. Vorrichtungen zur Befestigung beinhalten, welche eine bestimmte Funktion ermöglicht. Von dieser Vorrichtung zur individuellen Anpassung an die unterschiedlichsten Durchmesser, können beliebig viele Verwendung finden, sowie werkseitig eingearbeitet, werkseitig vormontiert oder zur Montage beiliegen.

Fig. 3n, 3o und Fig. 3p zeigen Beispiele solcher bevorzugten Ausführungsarten einer Vorrichtung bzw. von Vorrichtungen zur individuellen Anpassung an die unterschiedlichsten Durchmesser.

Fig. 3n zeigt eine Seitenansicht von zwei Schutzmantelsegmenten 11, mit zwei Abstandshalterungen 16, bestehend aus jeweils einem Quadratischen Körper, hier an der Innenseite, des jeweiligen Schutzmantelsegmentes 11 verlaufend, im montierten Zustand, an einer zu schützender Leitung 18. Die Vorrichtung zur individuellen Anpassung an die unterschiedlichsten Durchmesser 19, hier bestehend aus jeweils zwei flexiblen Körper, in leichter w-ähnlicher Ausbildung und beliebiger Formgebung der Enden, hier in T-Förmiger Ausbildung, welche mittels einer zusätzlichen Vorrichtung 26, hier bestehend aus jeweils zwei Schienen, beliebiger Länge und Höhe, welche an oder in einem Abstandshalter und/oder an oder in mehreren Abstandshalterungen 16 und/oder am oder im Schutzmantel 11 (Fig. 3o) angebracht werden bzw. vorhanden sind und eine Vorrichtung zur stationären Befestigung beinhalten. Diese Vorrichtung zur Stationären Befestigung kann z.B. mittels einer Aufnahmevorrichtung 27 erfolgen, welche die Einführung und Befestigung der Vorrichtung zur individuellen Anpassung an die unterschiedlichsten Durchmesser ermöglicht, ohne eine Verkürzung bzw. eine Beweglichkeit der Enden des flexiblen Körpern erfordert und/oder mittels Einführlöchern (Fig. 3o Nr. 28) erfolgen, welche an einem Ende oder den Enden der flexiblen Körpern eine Beweglichkeit, zumindest eines Endes voraussetzt, das ein zeitweißes Verkürzen eines oder mehreren Enden zulässt, um die Befestigen bzw. das Einführen in die Einführlöcher und die Abnahme ermöglicht. Weiterhin wäre es möglich die Vorrichtung zur individuellen Anpassung an die unterschiedlichsten Durchmesser mittels Hacken, Ösen oder ähnlichem anzubringen, so das die Enden stationär befestigt werden können. Bei Montage der Leitungsschutzvorrichtung wird die Ausführungsart einer Vorrichtung zur individuellen Anpassung an die unterschiedlichsten Durchmesser 19, die in der Leitungsschutzvorrichtung verläuft, wird durch das Volumen der Leitung 18, in Richtung des Schutzmantel gedrückt. Wobei die Enden des oder der beliebig geformten Körper, die Position beibehalten. Durch die entstandene Spannung wird die Leitungsschutzvorrichtung, an der zu schützenden Leitung fixiert. Von dieser Ausführungsart einer Vorrichtung zur individuellen Anpassung an die unterschiedlichsten Durchmesser können beliebig viele verwendet werden, sowie werkseitig eingearbeitet, werkseitig vormontiert oder zur Montage beliegen.

Fig. 3p zeigt eine Seitenansicht von zwei Schutzmantelsegmenten 11, mit zwei Abstandshalterungen 16, bestehend aus jeweils einem Quadratischen Körper, an der Innenseite, des Schutzmantels 11 verlaufen, im montierten Zustand, an einer zu schützender Leitung 18. Die Vorrichtung zur individuellen Anpassung an die unterschiedlichsten Durchmesser 19, besteht in dieser Ausführungsart aus jeweils zwei flexiblen Körper, in leichter w-ähnlicher Ausbildung und beliebiger Formgebung der Enden, hier in T-Förmiger Ausbildung. Vorzugsweise wird zur Befestigung der Vorrichtung zur individuellen Anpassung an die unterschiedlichsten Durchmesser 19, eine oder mehrere Führungsschienen 29 angebracht bzw. eingearbeitet, welche beliebig am oder im Abstandshalter und/oder an oder in den Abstandshalterungen und/oder an oder in der Innenseite des Schutzmantel platziert und durchgehend und/oder streckenweise verlaufen **kann. Bei Verwendung** einer durchgängigen Führungsschiene, wird der flexible Körper an **den jeweiligen offenen** Enden der Führungsschiene eingeführt. Sind die Führungsschienen nur streckenweise verlaufend, kann der so entstandene Freiraum 31 zusätzlich zur Montage 30 der flexiblen Körper genutzt werden, indem jeweils die Enden der flexiblen Körper zusammengedrückt, und in den Freiraum 30 positioniert und in Führungsschienen 29 eingeführt werden. Bei Montage der Leitungsschutzvorrichtung wird die Ausführungsart einer Vorrichtung zur individuellen Anpassung an die unterschiedlichsten Durchmesser 19, die in der Leitungsschutzvorrichtung verläuft, durch das Volumen der Leitung 18 bzw. der Leitungen, in Richtung des Schutzmantel gedrückt. Wobei die Enden der beliebig geformten Körper 19, die Position in der Führungsschiene bzw. Führungsscheinen verändern und entgegengesetzt verlaufen. Durch die entstandene Spannung wird die Leitungsschutzvorrichtung, an der zu schützenden Leitung fixiert. Von dieser Ausführungsart einer Vorrichtung zur individuellen Anpassung an die unterschiedlichsten Durchmesser können beliebig viele verwendet werden, sowie werkseitig vormontiert oder zur Montage beiliegen.

Um den Schutzmantel und/oder die Schutzmäntel und/oder mehrere Schutzmantelsegmente bei Montage auf die zu schützende Leitung, miteinander zu verbinden bzw. zu schließen, ist jede Verschlussart, ob werkseitig eingearbeitet, werkseitig vormontiert oder zur externen Anbringung, geeignet.

Fig. 4a und 4b zeigen Beispiele von werkseitig eingearbeiteten Verschlussmöglichkeiten. Fig. 4d, 4e und 4f zeigen Beispiele von externen Verschlussmöglichkeiten. Fig. 4c zeigt die Figuren 4d, 4e und 4f im angewendeten Zustand.

Fig. 4a zeigt ein Beispiel einer bevorzugten Ausführungsart einer Verschlussmöglichkeit, wenn mehrere Abstandshalterungen vorhanden sind, bestehend aus mehreren Verschlussorganen und Gegenverschlussorganen, welche vorzugsweise direkt in oder an den Abstandshalterungen eingearbeitet und/oder als Verlängerung an den Abstandshalterungen angebracht sind. Wie aus der Fig. 4a ersichtlich wird, besitzt das jeweilige Verschlussorgan 32 eine Rastnase 34, die in das als Rastkäfig ausgebildete Gegenverschlussorgan 33 eingeführt wird. Um das Verschlussorgan 32 und Gegenverschlussorgan 33, wieder zu lösen, wird Druck auf die Rastnasen 34 ausgeübt.

Fig. 4b zeigt ein weitere Ausführungsart einer Verschlussmöglichkeit, bestehend aus mehreren Verschlussorganen und Gegenverschlussorganen, welche auf der Außenseite der Leitungsschutzvorrichtung beliebig positioniert und angebracht sind. Wie aus der Fig. 4b ersichtlich wird, besitzt das Verschlussorgan 32 eine Rastnase 34, die in das als Rastkäfig ausgebildete Gegenverschlussorgan 33 eingeführt wird. Die Verschlussorgane und Gegenverschlussorgane können beliebig am Schutzmantel positioniert und auf jede Art und Weise befestigt werden, zum Beispiel mittels einer Verbindung, welche ein verschwenken ermöglicht.

Fig. 4c zeigt Beispiele von extern angebrachten Verschlussmöglichkeiten, an zwei Schutzmantelsegmenten 11. Nr. 35 zeigt eine mögliche Verschlussvariante mittels Kabeldriller, Nr. 36 zeigt eine mögliche Verschlussvariante mittels Kabelbinder und Nr. 37 mittels Klettbändern.

Fig. 4f zeigt eine Detailansicht eines Kabeldriller, entsprechend Nr. 35. Fig. 4d zeigt eine Detailansicht eines Kabelbinder, entsprechend Nr. 36. Fig. 4e zeigt eine Detailansicht eines Klettbandes, entsprechend Nr. 37.

Je nach Ausführungsart des Schutzmantels und/oder der Schutzmäntel und/oder Schutzmantelsegmenten und der gewählten Verschlussvariante bzw. deren Platzierung kann es von Vorteil sein, den Schutzmantel und/oder die Schutzmäntel und/oder die Schutzmantelsegmenten, mit einer Vorrichtung zu versehen, welche ein seitliches verrutschen verhindert.

Diese Vorrichtung welche ein seitliches verrutschen verhindert, kann auf jede Art und Weise ausgeführt sein und beliebig viele Verwendung finden und ist dadurch gekennzeichnet, das diese ein seitliches Verrutschen bzw. Aufklaffen der Leitungsschutzvorrichtung verhindert bzw. verhindern.

Fig. 5a und 5b zeigen Beispiele einer solchen Vorrichtung, welche ein seitliches verrutschen verhindert.

Fig. 5a zeigt eine Detailansichten von zwei Schutzmantelsegmenten 11. Wobei ein Schutzmantelsegment auf der Längskante eine oder mehrere Verlängerungen in Form eines Stiftes bzw. Stabilisierungsstiftes 38 und wobei das andere Schutzmantelsegment an der gegenübliegenden Stelle oder Stellen eine Gegenvertiefung 39 aufweist bzw. aufweisen. Beim Verschließen der Schutzmantelsegmente wird der oder die Stabilisierungsstifte 38 in die gegenüberliegende Gegenvertiefung bzw. Gegenvertiefungen 39 eingeführt.

Fig. 5b zeigt eine Detailansichten von zwei Schutzmantelsegmenten 11. Wobei ein Schutzmantelsegment entlang der Längskante, auf der Außenseite und/oder Innenseite des Schutzmantelsegmentes einen oder mehrere Stabilisierungsstifte 38, in beliebiger Länge und Form aufweist bzw. aufweisen. Nach Montage der Leitungsschutzvorrichtung, verhindert dieser Stabilisierungsstift 38 bzw. diese Stabilisierungsstifte ein seitliches verrutschen und bringt während der Montage den Vorteil, das kein genaues Einführen in eine Gegenvertiefung bzw. Gegenvertiefungen erforderlich ist.

Eine der weiteren Möglichkeiten wäre, mehrere Stabilisierungsstifte an den jeweiligen Längskanten eines Schutzmantels und/oder von Schutzmänteln und/oder von Schutzmantelsegmenten anzubringen.

Fig. 5c zeigt zwei miteinander verbundene Schutzmantelsegmente 11, wobei ein Schutzmantelsegment hier mit einem außen angebrachten Stabilisierungsstift 38, in der Mitte der Leitungsschutzvorrichtungslänge, versehen ist.

Je nach Ausführungsart der Schutzmäntel und/oder der Schutzmantelsegmente ist es von Vorteil eine Vorrichtung zu schaffen, welche eine Aneinanderreihung bzw. ein Verbinden benachbarter, unmittelbar angrenzender Schutzmäntel und/oder von Schutzmantelsegmenten ermöglicht, welche auf jede Art und Weise ausgeführt sein können.

Fig. 6a, 6b, 6c und 6d zeigen Beispiele möglicher Ausführungsarten einer solche Vorrichtung zur Aneinanderreihung bzw. zur Verbindung benachbarter, unmittelbar angrenzender Schutzmäntel und/oder von Schutzmantelsegmenten.

Fig. 6a und Fig. 6b zeigt ein Beispiel an einer Detailansicht von jeweils zwei miteinander verbundenen Schutzmantelsegmenten 11, welche auf der Stirnseite der Schutzmantelsegmente eine Vorrichtung zur Verbindung benachbarter, unmittelbar angrenzender Schutzmäntel und/oder von Schutzmantelsegmenten besitzen. Fig. 6a zeigt zwei miteinander verbundene Schutzmantelsegmente 11, welche an einer Stirnseite mit beliebig vielen Nasen 40 versehen sind. Fig. 6b zeigt zwei miteinander verbundene Schutzmantelsegmente 11, welche an einer Stirnseite mit beliebig vielen Gegenvertiefungen, der Nasenform 41, versehen sind. Fig. 6a und 6b werden durch zusammenführen der Nasen 40 und der jeweiligen Gegenvertiefung in Nasenform 41 miteinander Verbunden.

Fig. 6c und Fig. 6d zeigt ein Beispiel an einer Detailansicht von jeweils zwei miteinander verbundenen Schutzmantelsegmenten 11, welche auf der Stirnseite der Schutzmantelsegmente eine Vorrichtung zur Verbindung benachbarter, unmittelbar angrenzender Schutzmäntel bzw. von Schutzmantelsegmenten besitzen. Fig. 6c weist mehrere Verschlussorgane mit jeweils einer Rastnase 42 auf. Fig. 6d weist mehrere Gegenverschlussorgane 43 in Form eines Käfigs, zur Einrastung der Rastnase auf. Die Verschlussorgane mit Rastnase 42 und die Gegenverschlussorgane 43 können beliebig platziert und auf jede Art und Weise befestigt werden, sowie verschwenkbar z.B. mittels Stiftverbindungen 44 oder fest fixiert sein.

Weiterhin besteht die Möglichkeit, einen speziellen Abschluss, der Leitungsschutzvorrichtung zur Verfügung zu stellen, welche dadurch gekennzeichnet sind, dass die speziellen Abschlussschutzmäntel und/oder die Abschlussschutzmantelsegmente, in beliebiger Länge- und Durchmessergestaltung, in jeglicher Körperform z.B. eines Halbkreises, Viertelbogens, Bogenförmig, C-Förmig, Ellipsenförmig, Halbellipsenförmig, Unrunde, in regelmäßigen und unregelmäßigen Vielecken ausgeführt sein können, wobei die Abschlussschutzmäntel und/oder die Abschlussschutzmantelsegmente in jeglicher Art ausgebildet z.B. ziehharmonikaförmig, gewellt, glatt, quergerippt, trapezförmig, rechteckig und diese Ausbildungen in beliebiger Anordnung verlaufen können z.B. vertikal, horizontal, diagonal. Sowie die Abschlussschutzmäntel und/oder Abschlussschutzmantelsegmente in beliebiger Kombination bzw. Kombinationen der Körperform, der Ausbildung, der Anordnung, der Länge und Durchmesser ausgeführt sein können. Wobei aber kein Abstandshalter bzw. Abstandshalterungen und/oder keine Vorrichtung bzw. Vorrichtungen zur individuellen Anpassung an die unterschiedlichsten Leitungsdurchmesser enthalten sein muss.

Zur Befestigung der Abschlussschutzmäntel und/oder der Abschlussschutzmantelsegmente an den unmittelbar angrenzendem Schutzmantel bzw. angrenzenden Schutzmantelsegmenten, ist jede Art der Befestigung möglich, welche eine Aneinanderreihung bzw. ein Verbinden ermöglicht. Je nach Ausführungsart dieser Befestigung, welche ein Aneinanderreihen bzw. ein Verbinden ermöglich, kann es erforderlich sein, um ausreichend Stabilität bzw. ein Lösen zu verhindern auch diese Abschlussschutzmäntel und/oder die Abschlussschutzmantelsegmente mit einer Vorrichtung zu versehen, welche ein miteinander verbinden bzw. schließen ermöglicht.

Fig. 7a, 7b, 7c und 7d zeigen Beispiele von Ausführungsmöglichkeiten an mehreren Abschluss-Schutzmantelsegmenten und Beispiele von Befestigungsmöglichkeiten zur Aneinanderreihung an benachbarter, unmittelbar angrenzendem Schutzmantel bzw. angrenzenden Schutzmantelsegmenten und Beispiele einer Vorrichtung des miteinander verschließen.

Fig. 7a zeigt zwei Abschlussschutzmantelsegmente 45, in Kombination von ziehharmonikaförmiger und glatter Ausbildung, in Körperform eines Halbkreises. An einer Stirnseite befindet sich eine Vorrichtung welche das Aneinanderreihen, an benachbarten unmittelbar angrenzendem Schutzmantel bzw. von angrenzenden Schutzmantelsegmenten, in Form von Nasen 40, ermöglicht. Dies setzt natürlich voraus, das der angrenzende Schutzmantel bzw. die angrenzenden Schutzmantelsegmente Gegenvertiefungen in der selbigen Nasenform, Anzahl und Positionierung beinhalten.

Die zwei Abschlussschutzmantelsegmente 45 der Fig. 7a zeigen zwei Beispiele einer Vorrichtung des miteinander Verschließens, an der Längskante der Abschlussschutzmantelsegmente. Nr. 32 zeigt ein Verschlussorgan mit Rastnase 34, welche durch Einführen in das Gegenverschlussorgan 33, die zwei Abschlussschutzmantelsegmente miteinander verbindet bzw. verschließt. Nr. 40 zeigt eine Nase, welche durch Einführen in die Gegenvertiefung 41, die zwei Abschlussschutzmantelsegmente miteinander verbindet bzw. verschließt.

Fig. 7b zeigt zwei Abschlussschutzmantelsegmente 45, in ziehharmonikaförmiger Ausbildung und waagrechter, leicht diagonaler Anordnung, in Körperform eines Halbkreises, welche an einer Stirnseite eine Durchmesserverringerung aufweist. Durch diese ziehharmonikaförmige Ausbildung, in waagrechter, leicht diagonaler Anordnung, wird eine zusätzliche Flexibilität zur Durchmesserverringerung ermöglicht. An der anderen Stirnseite befindet sich eine Vorrichtung, welche das Aneinanderreihen, an benachbarten unmittelbar angrenzendem Schutzmantel bzw. von angrenzenden Schutzmantelsegmenten, hier in Form von Nasen 40 ermöglicht.

Fig. 7c zeigt ein Abschluss-Schutzmantelsegment 45, in glatter Ausbildung, in Körperform eines Halbkreises, welches auf einer Stirnseite eine Durchmesserverringerung und auf der anderen Stirnseite eine Vorrichtung, welche das Aneinanderreihen, an benachbarten unmittelbar angrenzendem Schutzmantel bzw. von angrenzenden Schutzmantelsegmenten aufweist, hier in Form von Nasen, in winkelförmiger Ausprägung 40.

Fig. 7d zeigt ein Abschlussmantelsegment 45, in ziehharmonikaförmiger Ausbildung und senkrechter Anordnung bzw. senkrecht verlaufend, in Körperform eines Halbkreises, welche an einer Stirnseite eine Durchmesserverringerung aufweist. Durch die ziehharmonikaförmige Ausbildung in senkrechter Anordnung, wird eine zusätzliche Flexibilität zur Längenanpassung ermöglicht. An der anderen Stirnseite befindet sich eine Vorrichtung, welche das Aneinanderreihen, an benachbarten unmittelbar angrenzendem Schutzmantel bzw. von angrenzenden Schutzmantelsegmenten ermöglicht, hier in Form von Nasen, in würfelartiger Ausprägung 40.

Weiterhin wäre es möglich an einer Längskante am oder im Schutzmantel und/oder an oder in den Schutzmänteln und/oder an oder in den Schutzmantelsegmenten und/oder an oder in den Abschlussschutzmänteln und/oder an oder in den Abschlussschutzmantelsegmenten und/oder an oder in einem Abstandshalter und/oder an oder in den Abstandshalterungen, Vorrichtungen beliebigen Maßes und Anzahl einzuarbeiten, werkseitig zu montieren oder zur Montage beizulegen, welche die gleichen Eigenschaften von Scharnieren aufweisen.

Fig. 8 zeigt ein Beispiel einer solchen Ausführungsart, einer Vorrichtung mit Scharnierähnlicher Eigenschaft, an zwei halbkreisförmigen Körperformen 11, welche mittels einer Prägung 48, hier des gleichen Materials, miteinander beweglich verbunden sind.

Die Leitungsschutzvorrichtung bzw. Leitungsschutzvorrichtungen mit ihren vielzähligen Variationsmöglichkeiten und Elementen können zusätzlich mit Lüftungsschlitzen oder Lüftungskammern und/oder Perforierungen, beliebiger Formgebung, beliebiger Größe und Anordnung, versehen sein. Fig. 3p zeigt ein Beispiel von eingearbeiteten Lüftungsschlitzen 46.

Alle Elemente und Ihre vielzähligen möglichen Ausführungsarten, dieser Leitungsschutzvorrichtung bzw. Leitungsschutzvorrichtungen kann bzw. können aus jedem geeigneten Material bzw. Materialien und Materialkombinationen, sowie in jeder Farbgebung, Nuancierung und Farbkombinationen hergestellt werden.

### Bezugszeichenliste

- 11: Schutzmantel oder Schutzmantelsegment
- 12: Klammerring einer Abstandshalterung
- 13: Abstandsrippe einer Abstandshalterung
- 14: Anlegering einer Abstandshalterung
- 15: Aufnahmeöffnung
- 16: Ausführungsart eines oder mehrer Abstandshalterungen
- 17: Auflagefläche einer Abstandshalterung
- 18: Leitung
- 19: Vorrichtung zur individuellen Anpassung an die unterschiedlichsten Leitungsdurchmesser
- 20: Nase
- 21: Gegenvertiefung der Nase
- 22: Schiene
- 23: Gegenvertiefung der Schiene
- 24: Auflagefläche, der Vorrichtung zur individuellen Anpassung an die unterschiedlichsten Leitungsdurchmesser
- 25: Zusätzliche eingearbeitete Auflagefläche, der Vorrichtung zur individuellen Anpassung an die unterschiedlichsten Leitungsdurchmesser
- 26: Schiene
- 27: Aufnahmevorrichtung
- 28: Einführloch
- 29: Führungsschiene
- 30: Freiraum
- 31: Voll-Linie, zur Kennzeichnung des Freiraumes
- 32: Verschlussorgan
- 33: Gegenverschlussorgan
- 34: Rastnase
- 35: Kabeldriller
- 36: Kabelbinder
- 37: Klettband
- 38: Vorrichtung zur Vermeidung des seitlichen Verrutschens
- 39: Gegenvertiefung einer Vorrichtung zur Vermeidung des seitlichen Verrutschens
- 40: Vorrichtung zur Aneinanderreihung bzw. zur Verbindung an benachbarten unmittelbar angrenzenden Schutzmantel und/oder Schutzmantelsegmenten, in Form einer Nase
- 41: Gegenvertiefung zu Nr. 40
- 42: Vorrichtung zur Aneinanderreihung bzw. zur Verbindung an benachbarten unmittelbar angrenzenden Schutzmantel und/oder Schutzmantelsegmenten, in Form eines Verschlussorgans mit Rastnase
- 43: Gegenverschlussorgan zu Nr. 42
- 44: Stiftverbindung
- 45: Abschlussmantelsegment
- 46: Lüftungsschlitz
- 47: Pfeil, zur Anzeige der Richtungsbewegung
- 48: Prägung mit Scharnierähnlicher Eigenschaft

## Patentansprüche

1. Leitungsschutzvorrichtung zum Schutze von zumindest einer Leitung (18), die von jeglicher Art, insbesondere zum Schutze der Leitungen von Kraftfahrzeugen und des täglichen Lebensbereiches, vor Tierverbiss und/oder zur allgemeinen Bündelung und/oder zur Umhüllung von der zumindest einen Leitung (18), wobei die Leitungsschutzvorrichtung zumindest einen Schutzmantel (11) und/oder Schutzmantelsegmente aufweist, die in beliebiger Längen- und Durchmessergestaltung sowie in jeglicher Körperform ausgeführt sein kann bzw. können, wobei zumindestens ein Abstandshalter und/oder mindestens eine Vorrichtung zur individuellen Anpassung an die unterschiedlichsten Durchmesser und wobei ggf. weiterhin wenigstens eine zusätzliche Vorrichtung vorgesehen ist, welche ein seitliches Verrutschen bzw. ein Aufklaffen der Schutzmäntel und/oder der Schutzmantelsegmente verhindert, **dadurch gekennzeichnet, dass**
a) die Vorrichtung zur individuellen Anpassung an die unterschiedlichsten Durchmesser aus mindestens zwei Federn (19) besteht
b) und dass die zusätzliche Vorrichtung jeweils zwei parallel verlaufenden Schienen (26) aufweist, welche an oder in der Innenseite der Leitungsschutzvorrichtung verlaufen.

2. Leitungsschutzvorrichtung nach Anspruch 1, **dadurch gekennzeichnet, dass** die zwei parallel verlaufenden Schienen (26) mit Einfuhrlöchern versehen sind.

3. Leitungsschutzvorrichtung nach Anspruch 1 oder 2, **dadurch gekennzeichnet, dass** die Federn (19) als zwei Schrauben-Druckfedern und/oder zwei Schrauben-Zugfedern und/oder mindestens zwei Gummis ausgebildet sind, welche jeweils parallel zueinander platziert und die zwei Enden jeweils, an den gegenüberliegenden Seiten an oder in der Innenseite der Leitungsschutzvorrichtung befestigbar sind.

4. Leitungsschutzvorrichtung nach Anspruch 3, **dadurch gekennzeichnet, dass** die Federn (19), mit einer zusätzlichen Auflagefläche, vorzugsweise in leicht bogenförmiger Ausbildung versehen sein können.

5. Leitungsschutzvorrichtung nach Anspruch 3, **dadurch gekennzeichnet, dass** die Federn (19) als mindestens zwei Biegungsfedern ausgebildet sind, welche jeweils spiegelbildlich und seitenverkehrt platziert und jeweils an einer Seite, auf jede Art und Weise, an oder in der Innenseite der Leitungsschutzvorrichtung befestigbar sind und das andere Ende frei im Inneren der Leitungsschutzvorrichtung endet.

6. Leitungsschutzvorrichtung nach Anspruch 3, **dadurch gekennzeichnet, dass** die Federn als mindestens zwei flexible Körpern, in w-ähnlicher Ausbildung, mit beliebiger Formgebung der beiden Enden, vorzugsweise in T-Förmiger Ausbildung ausgebildet sind, welche zueinander spiegelbildlich platziert sind und die beiden Enden, beweglich oder stationär an oder in der Innenseite der Leitungsschutzvorrichtung befestigbar sind.

## Claims

1. Line protection device for the protection of at least one cable line (18) of any type, especially for the protection of cables in motor vehicles and in general usage, from animal bites and/or for bundling and/or for covering at least one single cable line (18), in which the line protection device has a protective casing (11) and/or segments of protective casing that can be designed for any length and diameter and for any shape, in which at least a spacer and/or at least one device for individual adjustment to different diameters and, in which, as the case may be, additionally at least one device is provided that prevents lateral dislocation or gaping of the protective casing and/or that of the segments of the protective casing, is **characterized in that:**
a) the device for individual adjustment to different diameters consists of at least two springs(19);
b) the additional device has two parallel running rails (26) each, that run along side or inside the line protection device.

2. Line protection device as per Claim 1 is furthermore **characterized in that** the two parallel running rails (26) provided with insertion holes.

3. Line protection device as per Claim 1 or 2 is furthermore **characterized in that** the springs (19) are designed as two helical compression springs and/or two helical tension springs and/or at least two rubber fittings, which are placed parallel to each other and in which the two ends can be fixed to the opposite sides on or inside the line protection device.

4. Line protection device as per Claim 3 is furthermore **characterized in that** the springs (19) can be provided with an additional supporting base, preferably of a slightly arch shape.

5. Line protection device as per Claim 3 is furthermore **characterized in that** the springs (19) are designed as at least two flex springs which are each positioned in mirror images and laterally reversed and which can be fixed on one side in any manner, on or inside the line protection device and the other end terminates freely inside the line protection device.

6. Line protection device as per Claim 3 is furthermore **characterized in that** the springs are designed as at least two flexible bodies, in w-like shape, having any shape on both ends, preferably in a T-shape which are positioned in mirror images to each other and both the ends, that can be fixed in a movable or stationary position on or inside the line protection device.

## Revendications

1. Dispositif de protection des circuits pour la protection d'au moins un circuit(18), de toutes sortes, en particulier pour la protection des circuits des véhicules et des espaces de vie quotidiens, contre les morsures d'animaux et/ou généralement pour l'assemblage et/ou l'enveloppement d'où au moins un circuit(18), sachant que le dispositif de protection des circuits comporte au moins une gaine de protection (11) et/ou un segment de gaine de protection, qui puisse(ent) être réalisé(s) à une longueur et à un diamètre quelconques ainsi qu'à partir de formes différentes, sachant qu'au moins une entretoise et/ou au moins un dispositif d'adaptation individuel à différents diamètres est prévu et sachant que le cas échéant est prévu en outre au moins un dispositif supplémentaire, lequel empêche la gaine de glisser latéralement ou de s'écarter, **caractérisé en ce que**
a) Le dispositif se compose d'au moins deux ressorts (19) pour s'adapter individuellement à différents diamètres
b) Et que le dispositif supplémentaire comporte deux rails parallèles (26) lesquelles parcourent à l'intérieur ou sur la face intérieure du dispositif de protection des circuits.

2. Le dispositif de protection des circuits selon la revendication 1, est **caractérisé en ce que** les deux rails parallèles (26) sont équipés de trous d'insertion.

3. Le dispositif de protection des circuits selon les revendications 1 ou 2 est **caractérisé en ce que** les ressorts (19) sont constitués comme deux vis-ressorts de traction et/ou au moins comme deux caoutchoucs lesquels sont placés parallèlement l'un par rapport à l'autre et chacune des deux extrémités pouvant être attachés sur les côtés opposés à l'intérieur ou sur la face intérieure du dispositif de protection des circuits.

4. Le dispositif de protection des circuits selon la revendication 3 est **caractérisé en ce que** les ressorts (19) puissent être équipés d'une surface d'appui supplémentaire, de préférence de forme légèrement curviligne.

5. Le dispositif de protection des circuits selon la revendication 3 est **caractérisé en ce que** les ressorts (19) sont formés comme au moins deux ressorts courbes, lesquels sont placés en miroirs et inversés latéralement et pouvant être attachés chacun sur un côté, de différentes manières, à l'intérieur ou sur la face intérieure du dispositif de protection des circuits et l'autre extrémité se terminant librement à l'intérieur du dispositif de protection des circuits.

6. Le dispositif de protection des circuits selon la revendication 3 est **caractérisé en ce que** les ressorts sont formés comme deux corps flexibles, en forme de w, avec deux extrémités de forme quelconque, de préférence en forme de T, lesquels sont placées en miroir et les deux extrémités s'attachant de manière mobile ou fixe sur la face intérieure ou à l'intérieur du dispositif de protection des circuits.
